# FASCICULE DE BREVET EUROPEEN

(11) **EP 3 706 579 B1**
(45) Date de publication et mention de la délivrance du brevet: **06.04.2022**
(21) Numéro de dépôt: 17817774.7
(22) Date de dépôt: 09.11.2017
(51) Int. Cl.: A22C 17/00

(54) **DISPOSITIF POUR LA FABRICATION DE BROCHETTES D'ALIMENTS**
VORRICHTUNG ZUR HERSTELLUNG VON LEBENSMITTELSPIESSEN
DEVICE FOR PRODUCING FOOD KEBABS

(43) Date de publication de la demande: 16.09.2020
(73) Titulaire: Palga SAS International, 84091 Avignon Cedex 9 (FR)
(72) Inventeur: PELLET, Julien, 84091 Avignon Cedex 9 (FR); DOLLE, Jacques, 84091 Avignon Cedex 9 (FR)
(74) Mandataire: Cornuejols, Georges
(86) Numéro de dépôt international: PCT/FR2017/053054
(87) Numéro de publication internationale: WO 2019/092325

(56) Documents cités:
- WO-A1-2014/080356
- FR-A1- 3 050 908
- KR-A- 20150 080 766
- US-B1- 9 107 542

## Description

### DOMAINE TECHNIQUE DE L'INVENTION

La présente invention concerne un dispositif pour la fabrication manuelle, semi-automatique ou automatique de brochettes ou mini-brochettes d'aliments tels que viandes et/ou légumes, poissons, fruits ou autres, de toutes formes et sortes, carrées, rondes etc... avec toutes combinaisons et toutes associations de différents morceaux de différentes formes et toutes combinaisons et toutes associations de piques de toutes formes géométriques et toutes sortes d'embouts. L'invention se rattache au secteur industriel et/ou artisanal de la transformation de produits alimentaires.

### ÉTAT DE LA TECHNIQUE

Différentes solutions technologiques permettent la fabrication de brochettes carrées, notamment l'utilisation d'un récipient de forme carrée ou rectangulaire dans lequel on embroche des successions de couches d'aliments empilées. L'embrochage se fait au moyen de système en réseau de tubes d'embrochage et de tiges de poussée. Chaque pique est logé dans chaque tube. Les tiges de poussée maintiennent les piques en position dans les tubes et permettent l'embrochage des aliments dans le récipient en poussant les piques au travers des tubes jusque dans les aliments situés dans le récipient, comme décrit dans les documents FR 81 20367 et FR 80 24482.

On connaît les documents DE 25 53 476, DE 26 08 687, NL 1 003 990 et DE 20 2015 101411, qui décrivent des machines pour faire des brochettes, toutes de taille identique.

Concernant les brochettes d'autres formes que carrées, il existe différents systèmes dont des machines automatiques avec notamment des systèmes de plaques accouplées entre elles et présentant des empreintes aptes à recevoir les ingrédients. Ces plaques sont assemblées de manière à constituer un convoyeur sous forme d'une chaîne sans fin. L'ensemble du convoyeur est assujetti à des organes de commande pour amener pas à pas les plaques en regard d'un poste d'embrochage apte à engager un pique dans les ingrédients positionnés dans les empreintes. On note que chaque empreinte est de forme générale rectangulaire et les dimensions de l'empreinte, notamment sa longueur, sa largeur, sa profondeur, et éventuellement sa forme géométrique, doivent être déterminée au moment de la fabrication de l'équipement ce qui conduit à figer la composition de la brochette en sa forme et en ses ingrédients et en le pique utilisé.

On connaît le document KR20150080766 qui concerne un appareil de constitution de brochette comprenant un poussoir pour appliquer une pression sur l'arrière des brochettes placées sur un support de telle sorte que les brochettes soient déplacées vers l'avant et un presseur ayant une plaque de pression pour appliquer une pression sur une partie supérieure de l'espace de réception. Le poussoir a un moyen de déplacement monté des deux côtés d'une plaque. Le support chargé de brochettes est formé dans une structure double comprenant une barre de montage ayant une pluralité de rainures de siège et une barre auxiliaire pour régler une position horizontale de la rainure de siège et, par conséquent, le réglage horizontal et le réglage en hauteur du la rainure de l'assise sont facilement réalisés en utilisant la barre auxiliaire de telle sorte qu'une brochette peut être brochée avec précision au centre d'un objet.

### OBJET DE L'INVENTION

La présente invention vise à remédier à tout ou partie de ces inconvénients. Le problème que se propose de résoudre la présente invention, est aussi la fabrication de brochettes ayant des ingrédients de toutes formes, rondes, carrées et permettant des combinaisons modifiables des divers ingrédients par exemple à l'aide d'un contenant dénommé moule en V et longitudinal formé de deux plaques obliques formant un entonnoir ouvert sur la partie angulaire du V, et d'un contre moule en forme de V (entonnoir ouvert ou fermé) qui maintient les ingrédients sans les écraser avec un tassage horizontal et vertical réglable grâce à un peigne de tassage. La forme en V peut être répétée en une, deux, trois, six, dix fois etc..., on peut la disposer de façon horizontale, verticale, ou inclinée.

A cet effet, la présente invention vise un dispositif tel que défini dans la revendication 1.

La présente invention permet d'embrocher les ingrédients de toutes formes avec des piques à brochettes de section cylindriques, plates, rectangulaires variables ou non ou toute autre forme géométrique, comme des piques dit à drapeau mais sans être limitatif en rapport à ce type précis de pique, et de façon plus générale, tout pique et tous matériaux comme le bois, l'acier inoxydable, le plastique alimentaire ou autres avec toute forme d'embout préhenseur ou d'extrémité... avec plusieurs associations de formes possibles durant une même session d'embrochage.

### BRÈVE DESCRIPTION DES FIGURES

D'autres avantages, buts et caractéristiques de la présente invention ressortiront de la description qui va suivre, faite dans un but explicatif et nullement limitatif en regard du dessin annexé, qui illustrent des modes de réalisation particuliers du dispositif objet de l'invention :
- la figure 1 représente en vue éclatée l'ensemble du dispositif,
- la figure 2 représente l'ensemble du dispositif en vue rassemblée,

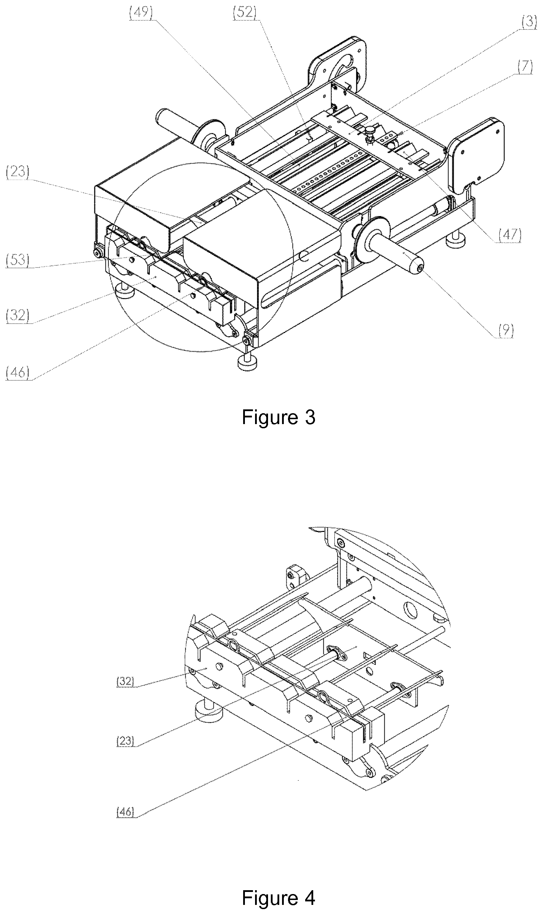

- les figures 3, 4 et 5 représentent un système d'embrochage avec une vue de détail de la zone concernée ainsi que l'ensemble pendant la phase d'embrochage en position fermée,

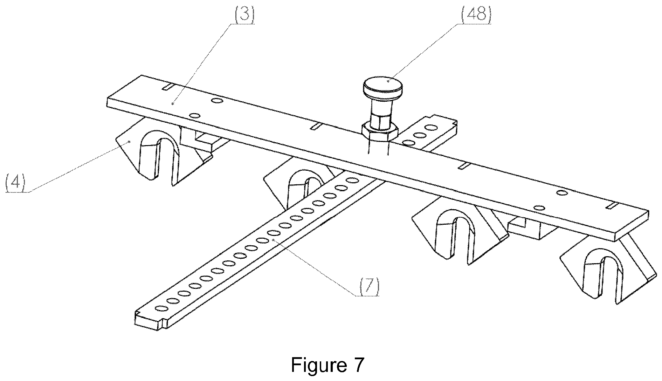

- les figures 6 et 7 représentent un système de tassage et de de verrouillage avec une vue de détail de la zone concernée,

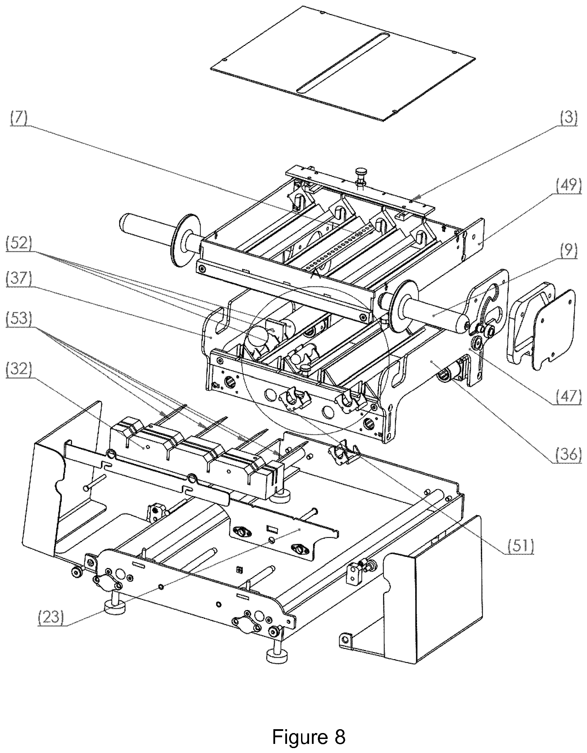

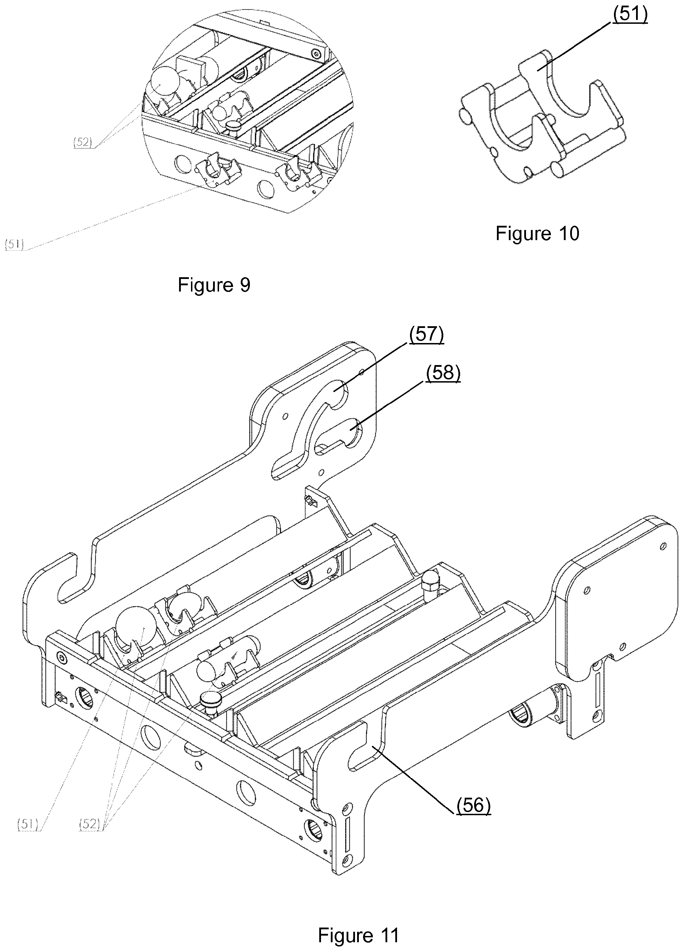

- les figures 8, 9 et 10 représentent un système de godet amovible avec une vue de détail,
- la figure 11 représentent le moule en V avec des godets,

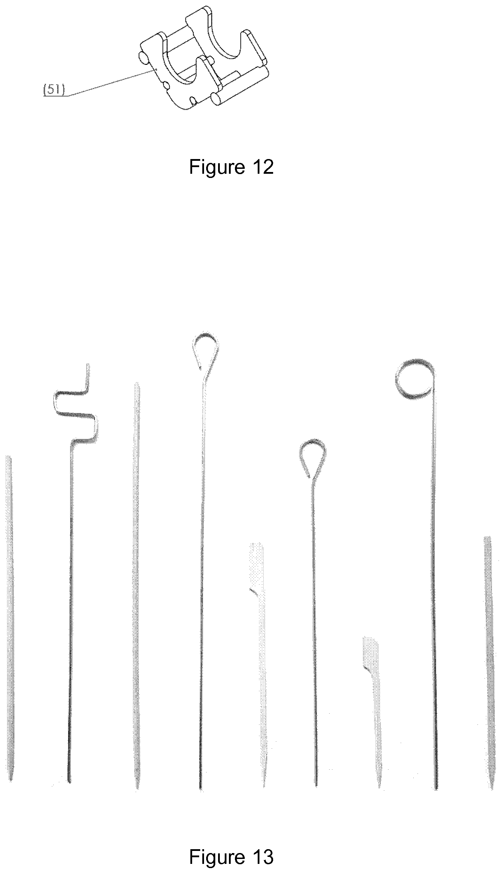

- la figure 12 représente un godet et
- la figure 13 représente une pluralité de piques pouvant être utilisés avec le dispositif objet de l'invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

Dans des modes de réalisation, le dispositif objet de l'invention permet la fabrication de brochettes ayant des ingrédients de toutes formes, rondes, carrées et permettant des combinaisons modifiables des divers ingrédients à l'aide d'un contenant dénommé moule en V et longitudinal formé de deux plaques obliques formant préférentiellement un entonnoir ouvert sur la partie angulaire du V, et d'un contre moule en forme de V (entonnoir ouvert ou fermé) qui maintient les ingrédients sans les écraser avec un tassage horizontal et vertical réglable grâce à un peigne de tassage. La forme en V peut être répétée en une, deux, trois, six, dix fois etc..., on peut la disposer de façon horizontale, verticale, ou inclinée.

Le remplissage du moule en V s'effectue de manière manuelle ou automatique, les ingrédients y sont déposés et sont chapotés par une plaque dite contre moule en V renversé, descendue manuellement ou automatiquement, et venant emprisonner les aliments sans les écraser mais en les contraignant à la dimension souhaitée par un système de peigne de tassage fixé sous le contre moule en V. L'utilisation de ce moule en V peut être manuelle, semi-automatique ou automatique.

L'utilisation de godets amovibles comme support d'aliments facilite l'embrochage de plusieurs tailles et formes de produits selon diverses combinaisons simultanée. Les godets sont des éléments distincts rapportés, soudés, usinés ou moulés en matière plastique, métallique ou composite. Ils permettent l'immobilisation des aliments avant et pendant l'embrochage. Ils sont en forme de demi-prisme ou demi-cylindre évidés et peuvent être fabriqués avec des formes spéciales type crevettes, tomates cerises, olives, champignons, ingrédients fragiles. Les godets sont coulissants et sont positionnés librement sur la partie nommée « moule » de la machine.

Puis l'ensemble est associé et tiré ou poussé selon la version (manuellement ou automatiquement) et l'ensemble vient s'embrocher sur les piques préalablement disposés (manuellement ou automatiquement) sur des guides support de piques, préformés et du fait de leur conception, permettant de recevoir toute forme de pique, traversant ainsi les ingrédients.

Un support de guidage piques permet le maintien du pique afin d'être introduit au milieu des ingrédients, de sorte que les entraxes des piques sont en correspondance avec les orifices du moule en V, et du contre moule en V renversé. Le nombre d'encoches recevant les piques est identique au nombre de profil en dent de scie du moule en V. Le support de guidage de piques est fixe ou mobile, il est placé en face dans le prolongement du support de pique, il permet de soutenir le pique pendant la course d'embrochage. Il est monté sur deux colonnes ou tiroirs et se déplace manuellement ou automatiquement afin d'être adapté à toute longueur de pique.

L'embout, de toute forme, du pique est placé dans le support de pique, le bout du pique 53 est appuyé sur le support de guidage et, de ce fait, guide l'embrochage vers le moule en V et le contre moule en V renversé assemblés. L'embout du pique y est positionné manuellement ou automatiquement. Il est pourvu de trois rainures (plus ou moins) qui permettent d'utiliser toutes les longueurs de piques. Il convient de mettre le pique dans la rainure correspondant à la bonne longueur, en l'insérant dans l'une des rainures ou sur le flanc extérieur du support 32 de piques 53 directement en cas de longueur plus importante.

Durant toute la phase d'embrochage, le contre moule 49 est maintenu en pression contre les aliments (évitant que ceux-ci bougent pendant l'embrochage) par un système de verrouillage mécanique manuel (ou organe de commande automatique), les flancs équipés de système de charnières maintiennent le contre moule 49 en position ouverte ou fermée, tout en permettant une course de tassage horizontale.

La récupération des brochettes s'effectue par une opération de démoulage, à l'aide d'un organe de commande ou d'un dispositif manuel, en séparant le moule du contre moule en V de brochettes embrochées.

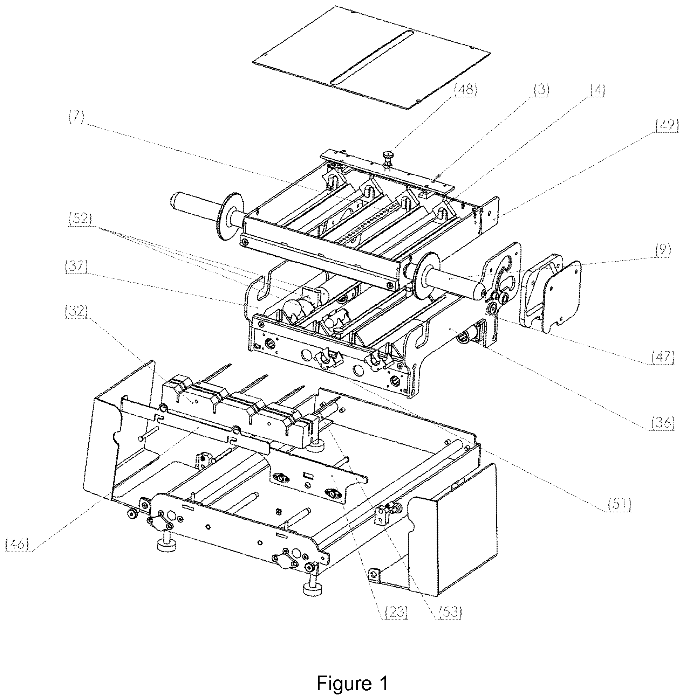

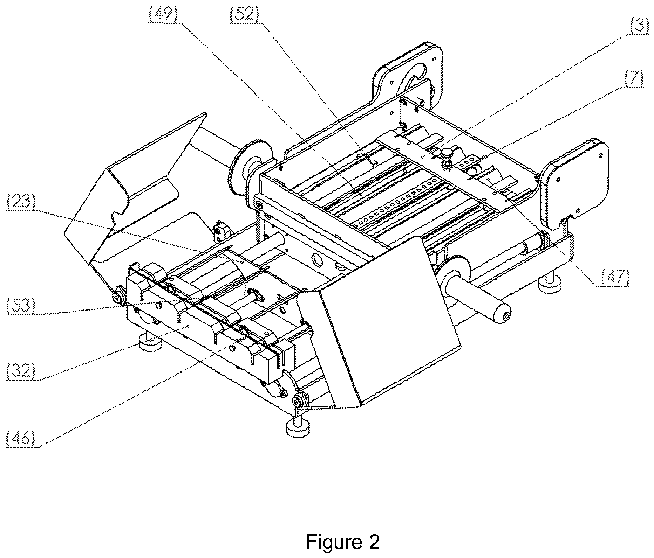

On observe, en figure 1, une vue éclatée d'ensemble du dispositif composé d'un moule en forme générale de « V » 47, d'aliments 52, de godets amovibles 51, d'un contre moule 49 en forme générale de « V » renversé, de piques 53, d'un peigne de tassage 4, d'un moyen de verrouillage et tassage 7, d'un support de guidage 23 de piques 53, d'un support 32 de piques 53 et de deux poignées 9. La figure 2 représente l'ensemble du dispositif en vue rassemblée.

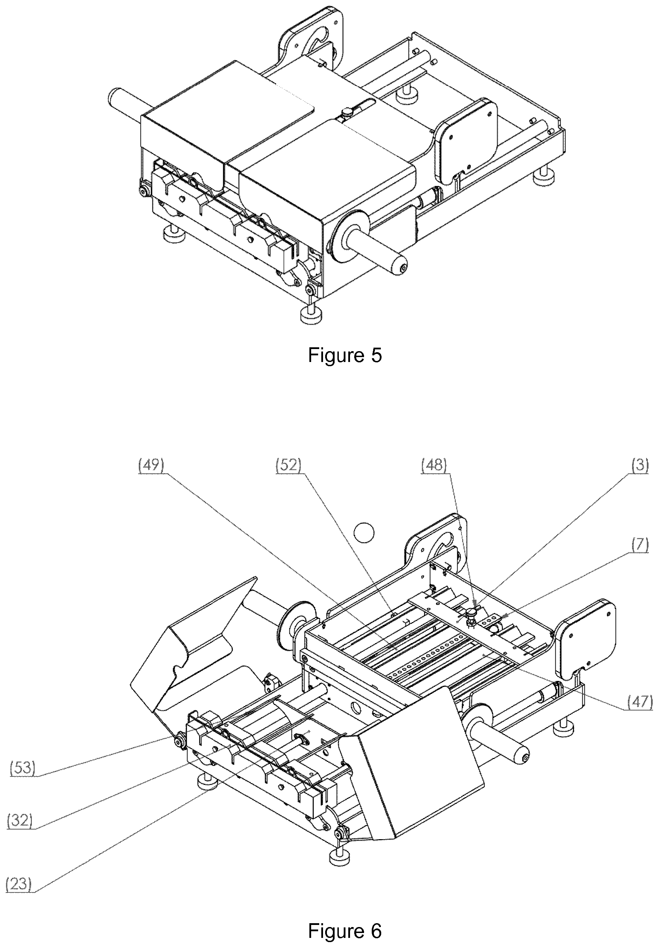

La présente invention permet l'embrochage de divers aliments 52, avec l'utilisation d'un récipient ou moule en forme de V 47 - le moule est réalisé avec un profil en dent de scie ou lisse, le contre moule en V renversé 49 est réalisé avec un profil en dent de scie ou lisse, de sorte que le moule 47 et le contre moule 49 sont placés en bonne coïncidence. Les formes évidées entre le moule 47 et le contre moule 49 sont préférentiellement de section sensiblement carrée, sans que cette forme soit limitative, permettant ainsi le remplissage de ces moules par des ingrédients de toutes formes 52, l'embrochage est réalisé à l'aide de piques de toutes formes géométriques 53 comme illustré en figure 6 avec toutes sortes d'embouts. Plus généralement, la présente invention concerne l'embrochage de morceaux de toute forme par tout pique 53.

Le moule en V 47 est amovible, de manière à pouvoir être garni d'aliments en dehors du dispositif de fabrication de brochette. Par exemple, plusieurs moules 47 sont associés au même dispositif pour qu'un opérateur puisse garnir des moules et qu'un autre réalise la pose du moule 47 garni et des piques, la fermeture du contre moule 49 et l'embrochage.

Le moule en V 47 est rempli par des aliments de toutes formes, les piques de toutes formes avec toutes sortes d'embouts, sont positionnés sur le support de piques 32 et sont soutenus droits pendant la course d'embrochage grâce au support de guidage 23. Le support de piques 32 a une forme correspondante extrudée creuse ce qui permet d'utiliser toute forme de piques - le pique ne peut reculer pendant la phase d'embrochage car il est bloqué par le sélectionneur 46 de pique 53 qui est coulissant, déportable dans les rainures et amovible et équipé d'un système de verrouillage. Puis le contre moule en V 49 vient se positionner en face manuellement ou automatiquement, le système est ainsi fermé et est prêt pour la phase d'embrochage que l'on positionne selon la longueur désirée sur le flanc ou les rainures.

L'embrochage a pour but d'insérer la pluralité de piques dans les aliments 52, à l'intérieur du moule en V 47.

Le contre moule en V renversé 49, maintient les ingrédients pendant l'embrochage. Il est équipé d'un ensemble de tassage constitué d'un support peigne 3 de peignes 4 (dont le nombre de dents correspond au nombre de profil en dent de scie du moule en V) d'un verrouillage tassage 7 et d'un doigt d'indexage 48. L'ensemble de tassage permet de comprimer plus ou moins, les ingrédients les uns contre les autres si nécessaire et de déterminer la longueur des ingrédients voulue, grâce aux peignes 4 qui bloquent les aliments et qui laissent le passage des piques et l'ensemble de tassage permet de régler la distance des ingrédients à chaque extrémité du pique. La précontrainte se fait manuellement grâce à un doigt d'indexage 48 qui vient se bloquer dans les trous du verrouillage tassage 7. Du fait de la multiplicité de trous le réglage est multiple. L'embrochage peut se faire automatiquement en poussant le contre moule par l'arrière.

L'embrochage se fait par l'action de tirer ou pousser de manière rectiligne l'ensemble assemblé du moule en V et du contre moule en V vers le pique grâce au système de poignée (vérins ou autre) 9 - l'embrochage peut se faire automatiquement horizontalement ou verticalement. Durant toute la phase d'embrochage, le contre moule en V renversé 49 est maintenu en pression contre les aliments (évitant que ceux-ci bougent pendant l'embrochage) par un système de verrouillage mécanique manuel 56 (ou organe de commande automatique), les flancs 36, 37 équipés de système de charnières 57, 58 maintiennent le contre moule en V 49 en position ouverte ou fermée, tout en permettant une course de tassage horizontale.

Le nombre de piques 53 correspond au nombre de moule en V, une, deux, trois, six dix etc...

Le démoulage des brochettes s'obtient en séparant la brochettes du moule en V 47. Le démoulage peut être automatique ou manuel par un système de mâchoires ou de parallélogramme.

Avec le dispositif pour la fabrication manuelle, semi-automatique ou automatique de brochettes d'aliments de toutes sortes, l'assemblage des brochettes s'effectue grâce à un ensemble mécanique en mouvement comprenant un récipient autonome ou moule 47 en forme générale de V. Préférentiellement, ce moule 47 n'est pas complètement un V, puisque les angles ne sont pas joints et laissent un grand espace libre, permettant le passage du système de positionnement (doigt d'indexage et sélectionneur de pique) des ingrédients sur le pique. Un contre moule 49 en forme générale de V renversé, sans être complètement un V, puisque les angles ne sont pas joints et laissent un grand espace libre, permettant le passage de l'ensemble de tassage, est équipé d'un ensemble de tassage. L'ensemble de tassage comporte :
- un support 3 de peigne 4,
- un moyen 7 de verrouillage et tassage et
- un doigt d'indexage 48.

Le moule 47 peut être en dent de scie ou lisse, longitudinal et formé de deux plaques obliques. Le moule 47 est préférentiellement réalisé à partir de plaques non jointes, permettant, entre elles, l'écoulement de jus, eau ou sang. Du fait que les produits carnés ne soient pas totalement compressés, grâce à cet espace, la perte d'exsudat est moindre qu'avec un système fermé. Les plaques peuvent avoir toutes formes. Elles sont autonomes, elles peuvent être remplies à l'extérieur de la machine. Le contre moule 49 est équipé du peigne 4 de tassage qui permet de dimensionner, de régler le degré de tassage et de maintenir les ingrédients pendant l'embrochage. Le contre moule 49 peut être réalisé avec un profil en dent de scie ou lisse à partir de plaques, préférentiellement non jointes, l'espace entre les plaques facilitant le lavage par le haut et le passage du système de tassage. Les plaques du contre moule 49 peuvent être identiques à celles du moule 47 de sorte que le moule et le contre moule sont placés en bonne coïncidence. La section de la forme évidée entre le moule 47 et le contre moule 49 est de forme sensiblement carrée, permettant ainsi le remplissage de cet évidement par des ingrédients de toutes formes, de toutes longueurs et dimensions, et selon toutes combinaisons possibles grâce à l'ensemble de tassage intégré dans le contre moule 49.

Le dispositif est équipé d'un support 32 de piques 53 qui permet d'utiliser du fait de sa conception des piques à brochettes de toute forme, de section cylindriques, plat, rectangulaires variables ou non ou toute autre forme géométrique avec toute sorte d'embout préhenseur ou d'extrémité avec toute sorte de combinaison. Le support 32 de piques 53 a une forme correspondante extrudée creuse ce qui permet d'utiliser toute forme de piques. L'embout du pique y est positionné manuellement ou automatiquement. L'embout est pourvu, par exemple, de trois rainures qui permettent d'utiliser toutes les longueurs de piques 53. L'utilisateur met le pique 53 dans la rainure correspondant à la bonne longueur, en l'insérant dans l'une des rainures. L'utilisateur insère le pique sur le flanc extérieur du support 32 de piques 53 directement en cas de longueur plus importante que les longueurs permises par les rainures.

Dans des modes de réalisation, le moule 47 est équipé de godets 51 amovibles. Il s'agit de supports pour aliments amovibles et coulissants, qui peuvent être fabriqués avec des formes spéciales type crevettes, tomates cerises, olives, champignons, ingrédients fragiles et qui permettent l'immobilisation des aliments avant et pendant l'embrochage. Les godets 51 sont positionnés dans le moule 47 comme des supports d'aliments. Les godets 51 facilitent l'embrochage de plusieurs formes et tailles d'aliments, notamment les aliments fragiles. Les godets 51 sont des éléments distincts rapportés, soudés, usinés ou moulés en matière plastiques, métallique ou composite. Les godets 51 permettent à la demande, l'immobilisation des aliments avant et pendant l'embrochage. Les godets 51 peuvent être en forme de demi-prisme ou demi-cylindre évidés. Les godets 51 sont fabriqués avec des formes spéciales type crevettes, tomates cerises, olives, champignons, ingrédients fragiles (raisin, foie gras) et qui permettent d'embrocher en leur milieu, les ingrédients qui y sont mis. L'utilisation des godets est optionnelle. Par exemple, le godet en surélevant l'ingrédient peut permettre de l'embrocher en son axe médian/milieu ; par exemple un raisin ou une tomate cerise n'auraient pas pu être embrochés en leur milieu sans ce godet rehausseur, car ils seraient tombés au fond du moule.

Le support 23 de guidage de piques 53 est fixe ou mobile. Il est placé en face dans le prolongement du support 32 de piques 53. Le support 23 permet de soutenir le pique 53 pendant la course d'embrochage. Le support 23 est monté sur deux colonnes ou tiroirs et se déplace manuellement ou automatiquement afin d'être adapté à toute longueur de pique.

L'embout de toute forme du pique 53 est placé dans le support 32 de pique. Le bout du pique 53 est appuyé sur le support 23 de guidage 23 et, de ce fait, guide l'embrochage vers le moule 47 et le contre moule 49 assemblés. Le support 32 de piques 53 est équipé d'un sélectionneur 46 de pique. Le sélectionneur 46 de pique est équipé d'un système de verrouillage, qui permet de bloquer le pique 53 et de l'empêcher de reculer pendant la phase d'embrochage. Le sélectionneur 46 de pique est coulissant et déportable dans les rainures. Le sélectionneur 46 de pique 53 peut être constitué d'une réglette amovible. Il maintient les piques dans une position fixe pendant l'embrochage.

Préférentiellement, le contre moule 49 est équipé de flancs 36 et 37 ayant comme fonction de maintenir le contre moule 49 en position ouverte ou fermée avec un système de charnière, tout en permettant une course de tassage horizontale. Le contre moule 49 peut être équipé d'un verrouillage 56 permettant le maintien pendant la phase d'embrochage.

Le support de piques est, par exemple, séparé en trois zones délimitées par le sélectionneur 46 de pique, amovible et déplaçable, au choix, par l'utilisateur, qui permet également, l'appui pendant l'embrochage en empêchant le pique de reculer. La première zone, la plus large des trois (par exemple encoche de 4 mm sur la largeur dans le support piques), permet l'utilisation de piques dits standard (de toutes formes géométriques : cylindrique, plate, rectangulaire mais sans embout). La zone intermédiaire est constituée de petits logements ayant une forme, extrudée, creuse, usinée de façon à correspondre à l'embout préhenseur choisi (qui est sur le pique souhaité par le client). La dernière zone, la plus étroite, est réservée aux piques courts et/ou ayant un embout préhenseur plat (type piques bambou à drapeau ou teppo stick, marque déposée). Le support de piques est amovible et peut être décalé en hauteur, grâce à des plaques de rehausse, afin de correspondre à la hauteur de l'embout si nécessaire.

Le support de piques recevant le pique est usiné de telle sorte que le pique puisse être mis en position tout en garantissant, l'alignement de la pointe de celui-ci vers les aliments à embrocher.

L'ensemble ainsi constitué permet donc d'utiliser des piques à brochettes de toutes formes, de sections cylindriques, plates, rectangulaires, variables ou non, ou toutes autres formes géométriques avec toutes sortes d'embouts préhenseurs ou d'extrémités avec toutes sortes de combinaisons. L'embout du pique est positionné manuellement ou automatiquement dans le support 32 de piques 53. On met le pique dans la zone correspondant à la bonne longueur, en l'insérant dans l'une des zones ou sur la partie extérieure du support 32 de piques directement en cas de longueur plus importante.

L'ensemble de tassage permet de gérer le tassage horizontal des ingrédients à souhait et de comprimer plus ou moins les ingrédients les uns contre les autres si nécessaire et de déterminer la longueur des ingrédients voulue, grâce au peigne 4 qui laissent le passage des piques 53 mais qui bloquent les aliments. La précontrainte se fait manuellement grâce au doigt d'indexage 48 qui vient se bloquer dans l'un des trous du moyen de verrouillage tassage 7 constitué d'une sorte de réglette perforée d'une multitude de trous. Du fait de la multiplicité des trous, les réglages sont multiples. L'ensemble de tassage permet de régler la distance des ingrédients à chaque extrémité du pique.

Le dispositif selon l'invention est particulièrement destiné à la fabrication industrielle de brochettes ou autres produits compactés, de toutes formes sur tous supports.

## Revendications

1. Dispositif pour la fabrication de brochettes d'aliments, **caractérisé en ce qu'**il comporte au moins un ensemble mécanique comportant :
- un moule (47) et
- un contre moule (49) équipé d'un ensemble de tassage constitué :
d'un support de peigne (3) supportant un peigne (4) de tassage,
d'un doigt d'indexage (48) du support de peigne,
d'un moyen de verrouillage du support de peigne et de tassage (7) et
l'ensemble de tassage intégré dans le contre moule permettant de dimensionner, de régler le degré de tassage et de maintenir les aliments pendant l'embrochage ; et
- un support (32) de piques (53).

2. Dispositif selon la revendication 1, dans lequel chaque peigne (4) est configuré pour laisser le passage d'un pique (53) mais bloquer les aliments.

3. Dispositif selon l'une des revendications 1 ou 2, dans lequel le moule (47) est amovible du dispositif.

4. Dispositif selon l'une des revendications 1 à 3, dans lequel le support (32) de pique (53) est séparé en zones délimitées par un sélectionneur (46) de pique :
- une première zone, la plus large pour l'utilisation de piques standard,
- une zone intermédiaire, constituée de logements ayant une forme correspondant à l'embout préhenseur choisi et
- une dernière zone, la plus étroite, réservée aux piques courts et/ou ayant un embout préhenseur plat.

5. Dispositif selon l'une des revendications 1 à 4, dans lequel le moule (47) est équipé de godets (51) amovibles et coulissant formant des supports pour aliments.

6. Dispositif selon l'une des revendications 1 à 5, dans lequel le moyen de verrouillage et tassage (7) est constitué d'une réglette perforée (7) d'une multitude de trous.

7. Dispositif selon la revendication 6, dans lequel le doigt d'indexage (48) est configuré pour se bloquer dans l'un des trous du moyen de verrouillage et tassage (7).

8. Dispositif selon l'une des revendications 1 à 7, dans lequel le moule (47) comporte deux plaques obliques non jointives.

9. Dispositif selon l'une des revendications 1 à 8, dans lequel le contre moule (49) possède une section en « V » renversé (49), dans lequel le contre moule (49) est réalisé à partir de plaques non jointes

10. Dispositif selon l'une des revendications 1 à 9, dans lequel l'ensemble mécanique est, lors de l'embrochage, en mouvement par rapport au support (32) de pique (53).

11. Dispositif selon l'une des revendications 1 à 10, qui comporte un support de guidage (23) de pique (53) placé en face dans le prolongement du support (32) de pique (53).

12. Dispositif selon l'une des revendications 1 à 11, dans lequel le support (32) de pique (53) est équipé d'un sélectionneur (46) de pique.

13. Dispositif selon la revendication 12, dans lequel le sélectionneur (46) de pique (53) est équipé d'un système de verrouillage pour bloquer le pique (53) et l'empêcher de reculer pendant la phase d'embrochage.

14. Dispositif selon l'une des revendications 12 ou 13, dans lequel le sélectionneur (46) de pique (53) est coulissant et déportable dans des rainures du support (32) de pique (53).

15. Dispositif selon l'une des revendications 1 à 14, dans lequel le contre moule (49) est équipé de flancs (36), (37) articulés par une charnière.

## Patentansprüche

1. Vorrichtung für die Herstellung von Lebensmittelspießen, **dadurch gekennzeichnet, dass** sie wenigstens eine mechanische Gruppe umfasst, umfassend:
- eine Form (47) und
- eine Gegenform (49), die mit einer Zusammendrückgruppe ausgerüstet ist, die gebildet ist aus:
einem Trägerblatt (3), das ein Zusammendrückblatt (4) trägt,
einem Indexierungsfinger (48) des Trägerblattes,
einem Verriegelungsmittel des Träger- und des Zusammendrückblattes (7) und
der Zusammendrückgruppe, die in die Gegenform eingebaut ist, die das Auslegen, das Einstellen des Zusammendrückgrades und das Halten der Lebensmittel während des Aufsteckens zulassen; und
- einem Träger (32) für Spieße (53).

2. Vorrichtung gemäß Anspruch 1, bei der jedes Blatt (4) ausgestaltet ist, um den Durchgang eines Spießes (53) zu lassen, aber die Lebensmittel zu verrasten.

3. Vorrichtung gemäß einem der Ansprüche 1 oder 2, bei der die Form (47) von der Vorrichtung abnehmbar ist.

4. Vorrichtung gemäß einem der Ansprüche 1 bis 3, bei der der Träger (32) für Spieße (53) in Bereiche unterteilt ist, die von einem Spießauswähler (46) abgegrenzt sind:
- einen ersten Bereich, den größten für die Verwendung von Standardspießen,
- einen Zwischenbereich, der aus Aufnahmen gebildet ist, die eine Form aufweisen, die dem ausgewählten Greiferende entspricht und
- einen letzten Bereich, den engsten, der für die kurzen und/oder die Spieße vorbehalten ist, die ein flaches Greiferende aufweisen.

5. Vorrichtung gemäß einem der Ansprüche 1 bis 4, bei der die Form (47) mit abnehmbaren und gleitenden Kapseln (51) ausgerüstet ist, die Träger für Lebensmittel bilden.

6. Vorrichtung gemäß einem der Ansprüche 1 bis 5, bei der das Verriegelungs- und Zusammendrückmittel (7) aus einer perforierten Leiste (7) einer Vielzahl von Löchern gebildet ist.

7. Vorrichtung gemäß Anspruch 6, bei der der Indexierungsfinger (48) ausgestaltet ist, um in einem der Löcher des Verriegelungs- und Zusammedrückmittels (7) zu verrasten.

8. Vorrichtung gemäß einem der Ansprüche 1 bis 7, bei der die Form (47) zwei nicht fugendichte, schräge Platten umfasst.

9. Vorrichtung gemäß einem der Ansprüche 1 bis 8, bei der die Gegenform (49) einen Abschnitt in umgekehrter "V"-Form (49) besitzt, in der die Gegenform (49) ausgehend von nicht fugendichten Platten realisiert ist.

10. Vorrichtung gemäß einem der Ansprüche 1 bis 9, bei der die mechanische Gruppe beim Aufstecken im Verhältnis zum Träger (32) für Spieße (53) in Bewegung ist.

11. Vorrichtung gemäß einem der Ansprüche 1 bis 10, die einen Führungsträger (23) für Spieße (53) umfasst, der in der Verlängerung des Trägers (32) für Spieße (53) gegenüber angeordnet ist.

12. Vorrichtung gemäß einem der Ansprüche 1 bis 11, bei der der Träger (32) für Spieße (53) mit einem Spießauswähler (46) ausgerüstet ist.

13. Vorrichtung gemäß Anspruch 12, bei der der Auswähler (46) für Spieße (53) mit einem Verriegelungssystem zum Verrasten des Spießes (53) und um ihn daran zu hindern, während der Aufsteckphase zurückzuweichen, ausgerüstet ist.

14. Vorrichtung gemäß einem der Ansprüche 12 oder 13, bei der der Auswähler (46) für Spieße (53) in Rillen des Trägers (32) für Spieße (53) gleitend und ausschwenkbar ist.

15. Vorrichtung gemäß einem der Ansprüche 1 bis 14, bei der die Gegenform (49) mit Flanken (36), (37) ausgerüstet ist, die durch ein Scharnier artikuliert sind.

## Claims

1. Device for producing food brochettes, **characterized in that** it comprises at least one mechanical assembly comprising:
- a mold (47) and
- a counter-mold (49) equipped with a tamping assembly comprised of:
a rack holder (3) holding a tamping rack (4),
a locking bolt (48) for locking the rack holder,
a means for locking the tamping and rack holder (7) and
the tamping assembly incorporated in the counter-mold making it possible to size and adjust the level of tamping and to hold the foodstuffs during the skewering; and
- a holder (32) for skewers (53).

2. Device according to claim 1, wherein each rack (4) is configured to let a skewer (53) pass but to block the passage of the foodstuffs.

3. Device according to one of claims 1 or 2, wherein the mold (47) can be removed from the device.

4. Device according to one of claims 1 to 3, wherein the holder (32) for a skewer (53) is separated into areas delimited by a skewer selector (46):
- a first area, the widest, for using standard skewers;
- an intermediate area, made up of housings having a shape matching the selected gripper end-fitting; and
- a last area, the narrowest, reserved for short skewers and/or skewers having a flat gripper end-fitting.

5. Device according to one of claims 1 to 4, wherein the mold (47) is equipped with removable and sliding buckets (51) forming holders for foodstuffs.

6. Device according to one of claims 1 to 5, wherein the locking and tamping means (7) is comprised of a perforated strip (7) with a multitude of holes.

7. Device according to claim 6, wherein the locking bolt (48) is configured to be held in one of the holes of the locking and tamping means (7).

8. Device according to one of claims 1 to 7, wherein the mold (47) comprises two non-contiguous inclined plates.

9. Device according to one of claims 1 to 8, wherein the counter-mold (49) has an inverted "V" cross-section (49), wherein the counter-mold (49) is realized from non-contiguous plates.

10. Device according to one of claims 1 to 9, wherein, during the skewering, the mechanical assembly moves relative to the holder (32) for a skewer (53).

11. Device according to one of claims 1 to 10, which comprises a guide bracket (23) for a skewer (53) placed in front of the extension of the holder (32) for a skewer (53).

12. Device according to one of claims 1 to 11, wherein the holder (32) for a skewer (53) is equipped with a skewer selector (46).

13. Device according to claim 12, wherein the selector (46) for a skewer (53) is equipped with a locking system to lock the skewer (53) and prevent it from moving back during the skewering phase.

14. Device according to one of claims 12 or 13, wherein the selector (46) for a skewer (53) is slidable and can move in the grooves of the holder (32) for a skewer (53).

15. Device according to one of claims 1 to 14, wherein the counter-mold (49) is equipped with sides (36), (37) articulated by a hinge.
